# FASCICULE DE BREVET EUROPEEN

(11) **EP 2 443 207 B1**
(45) Date de publication et mention de la délivrance du brevet: **31.07.2013**
(21) Numéro de dépôt: 10734161.2
(22) Date de dépôt: 14.06.2010
(51) Int. Cl.: C09D 183/04, C09D 183/06, C08J 7/04, C07C 277/00, D06M 15/643, D21H 19/32

(54) **PROCEDE D'ENDUCTION D'UNE COMPOSITION SILICONE NE CONTENANT PAS D'ETAIN SUR UN SUPPORT SOUPLE**
VERFAHREN ZUR BESCHICHTUNG EINER ZINNFREIEN SILIKONZUSAMMENSETZUNG AUF EINEM FLEXIBLEN MEDIUM
METHOD FOR COATING A TIN-FREE SILICON COMPOSITION ON A FLEXIBLE MEDIUM

(30) Priorité: 15.06.2009 FR 0902883
(43) Date de publication de la demande: 25.04.2012
(73) Titulaire: Bluestar Silicones France, 69003 Lyon (FR)
(72) Inventeur: MALIVERNEY, Christian, F-69690 Saint Julien sur Bibost (FR)
(74) Mandataire: Mekki, Boualem
(86) Numéro de dépôt international: PCT/FR2010/000432
(87) Numéro de publication internationale: WO 2010/146249

(56) Documents cités:
- EP-A1- 1 985 666
- US-A- 4 489 127

## Description

La présente invention concerne un procédé d'enduction sur un support souple qui est en textile, en papier, en polychlorure de vinyle, en polyester, en polypropylène, en polyamide ; en polyéthylène ; en polyuréthanne, en tissus de fibres de verre non tissés ou en polyéthylène téréphtalate par une composition silicone élastomère réticulable par polycondensation ne contenant pas d'étain.

Le domaine général de l'invention est celui de l'utilisation de compositions silicones, réticulables par des réactions de polycondensation, pour produire un élastomère éventuellement en couche mince sur un support souple qui est en textile, en papier, en polychlorure de vinyle, en polyester, en polypropylène, en polyamide ; en polyéthylène ; en polyuréthanne, en tissus de fibres de verre non tissés ou en polyéthylène téréphtalate.

L'enduction de formulations silicones sur des supports souples vise de nombreuses applications. Par exemple, lorsque le support souple est un textile, des propriétés d'hydrofugation sont visées ou lorsque le support est un papier ou un polymère de type PVC, PET... des propriétés d'anti-adhérence sont le plus souvent recherchées.

Ainsi, une fois appliquée sur un support, la formulation silicone réticule pour former un revêtement solide en élastomère silicone. Dans ces formulations silicones liquides d'enduction, la phase silicone peut être diluée dans un solvant.

Il est connu d'utiliser des compositions silicones réticulables pour l'enduction de matières textiles pour obtenir des propriétés d'adhérence à la peau et d'antiglisse, tel que notamment pour certains vêtements et les articles d'hygiène. Mais l'effet tackant, c'est-à-dire l'effet d'adhérence, n'est pas toujours obtenu, ou alors de manière insuffisante.

Il est aussi connu d'utiliser des compositions silicones réticulables pour préparer des revêtements anti-adhérents et hydrofuges sur des supports souples, par exemple en papier ou en film polymère. Dans ces applications, les formulations silicones liquides d'enduction contiennent, outre les polymères silicones, un catalyseur de polycondensation ou de polyaddition ou un amorceur cationique ou radicalaire.

Si la fonction première de tel revêtement silicone est l'anti-adhérence de sa face externe, il n'en reste pas moins que le revêtement doit être fixé, par sa face interne, sur le support solide souple, avec une bonne adhérence.

Les revêtements anti-adhérents sont utiles pour de nombreuses applications où il est nécessaire de rendre non- adhérent à d'autres matériaux une surface ou un matériau qui normalement adhérerait à eux. Par exemple, les compositions silicones sont utilisées comme revêtements pour papiers anti-adhérents et peuvent ainsi être associées à des éléments adhérents pouvant être facilement libérés sans perdre leurs propriétés adhérentes, ces éléments pouvant être des adhésifs sensibles à la pression pour étiquettes, stratifiés décoratifs, ruban de transfert, etc. Les revêtements anti-adhérents à base de silicone appliqués sur papier, polyéthylène, polypropylène, polyester et autres supports de ce type, sont également utiles comme surfaces anti-adhérentes pour des applications de manipulations de la nourriture et d'emballage industriel.

Bien que les compositions réticulant par polyaddition ou par voie cationique soient largement répandues pour la formation de revêtement sur support souple, il en demeure que les compositions réticulant par des réactions de polycondensation conservent un atout majeur du fait de leur facilité de mise en oeuvre (réticulation par l'humidité de l'air ou par adjonction d'eau à température ambiante) et quelles ne nécessitent pas d'apport d'énergie (thermique ou par rayonnement UV) pour leur mise en oeuvre.

Les formulations des élastomères réticulant par polycondensation font généralement intervenir une huile silicone, généralement un polydiméthylsiloxane, à terminaisons hydroxylées, éventuellement pré-fonctionnalisées par un silane de façon à présenter des extrémités alcoxy, un réticulant, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc.

Ces compositions organopolysiloxaniques vulcanisables dès la température ambiante sont bien connues et sont classées en 2 groupes distincts: les compositions monocomposants (RTV-1) et les compositions bicomposants (RTV-2).

Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomérique.

Généralement, les compositions monocomposants (RTV-1) réticulent quand elles sont exposées à l'humidité de l'air, c'est-à-dire qu'elles ne peuvent réticuler dans un milieu en confiné. Par exemple, les compositions silicones monocomposant utilisées comme mastics ou adhésifs réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité. Les élastomères silicones monocomposants à extrémités -Si(OR) sont parfois désignés sous l'appellation élastomères alcoxy.

Quand aux compositions bicomposants, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:
- un polymère réactif α,ω-dihydroxydiorganopolysiloxane,
- un agent de réticulation, généralement un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, les chélates de titane (EP-A-0 885 933, US-5 519 104, US-A-4,515,932, US-A-4,563,498, US-A-4,528,353).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Ainsi, US 4 489 127 A décrit des composés amine en tant que catalyseurs de condensation.

Par ailleurs,_la demande internationale WO 2004/020525 décrit des compositions silicones monocomposants (RTV-1) utilisées comme mastics ou adhésifs et qui réticulent à froid quand elles sont exposées à l'humidité de l'air et comprenant en plus des composants habituels:
- un réticulant (D) spécifique et essentiel qui est un silane à fonctions 1-méthylvinyloxy connu pour sa forte réactivité comparée à celle des réticulants classiques, et
- des catalyseurs qui sont des dérivés organiques à fonction imines de formules **(I)** ou **(II)** suivantes: 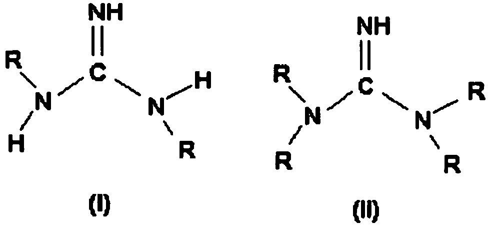
avec R étant un radical spécifique choisi parmi les groupes suivants : méthyle, isopropyle, phényle et orthotolyle. Des exemples de ces dérivés organiques de type imine sont la 1,3-diphénylguanidine, la 1,3-di-o-tolylguanidine, la 1,3-diméthylguanidine et la 1,1,3,3-tétraméthylguanidine qui est le dérivé préféré. Ces dérivés présentent la particularité de posséder une fonction imine non substituée, c'est-à-dire une fonction du type C=NH.
Il est à noter qu'un réticulant classique de type trialcoxysilane, composant (E), est toujours utilisé en association avec le réticulant (D) qui est un silane connu pour sa forte réactivité due à la présence de fonctions de type 1-méthylvinyloxy.

Cependant, le problème associé à l'utilisation des catalyseurs organiques à fonction imines décrits dans la demande internationale WO 2004/020525 est qu'ils doivent être utilisés en présence de réticulants spécifiques très réactif et coûteux (silanes à fonctions 1-méthylvinyloxy), c'est à dire que des réticulants classiques de structures simples, qui sont très largement utilisés dans les formulations RTV-I ou RTV-II, tels que par exemple les alkyltrialcoxysilanes, les silicates d'alkyle ou les polysilicates d'alkyle, ne peuvent leur être associés sans la présence obligatoire d'un réticulant très réactif tel que le silane à fonctions 1-méthylvinyloxy. En effet, sans la présence de ce silane très réactif la réticulation de la composition en élastomère est alors insuffisante et ne permet pas d'obtenir de bonnes propriétés mécaniques. Ainsi, le dérivé 1,1,3,3-tétraméthylguanidine, qui est présenté dans le mode de réalisation préférentiel de cette demande de brevet, lorsqu'il est utilisé avec un réticulant classique, tel que par exemple un polysilicate d'alkyle, et sans la présence d'un silane réactif à fonction méthylvinyloxy, dans un RTV monocomposant (RTV-1), la réticulation du système est alors insuffisante et ne peut générer un élastomère silicone.

Ces problèmes de réactivité du réticulant par exemple dans les compositions silicones monocomposants (RTV-1) sont bien connus par l'homme de l'art. En effet, les réticulants alcoxysilanes les plus utilisés sont ceux présentant des groupes méthoxy pour leurs réactivités intrinsèques. Cependant, un des problèmes associés à l'utilisation de ce type d'alcoxysilanes est un dégagement de méthanol source de problèmes sur un plan d'hygiène et de sécurité.

Dans ce contexte, l'un des objectifs essentiels de la présente invention est de mettre au point un procédé d'enduction sur un support souple avec une composition silicone élastomère réticulable par polycondensation ne contenant pas d'étain.

Un deuxième objectif essentiel de la présente invention est de mettre au point un procédé d'enduction sur un support souple en textile qui après réticulation d'une composition siliconer sans étain sur un support souple en textile apporte un effet d'adhérence (ou tack) du textile enduit et sans augmenter la compression du textile sur la peau.

Tous ces objectifs, parmi d'autres, sont atteints par la présente invention qui concerne un procédé d'enduction d'une composition silicone **X** précurseur d'un élastomère et réticulable par des réactions de polycondensation sur un support souple **S** qui est en textile, en papier, en polychlorure de vinyle, en polyester, en polypropylène, en polyamide ; en polyéthylène ; en polyuréthanne, en tissus de fibres de verre non tissés ou en polyéthylène téréphtalate comprenant les étapes a), b) et c) suivantes :
a) on prépare une composition silicone **X** réticulable en élastomère par des réactions de polycondensation, ne contenant pas de catalyseur métallique et comprenant:
   - une base silicone **B** comprenant au moins une huile polyorganosiloxane réticulable par réaction de polycondensation de manière à former un élastomère silicone, et
   - une quantité catalytiquement efficace d'au moins un catalyseur de polycondensation **A** qui est un composé organique non silylé et répondant à la formule générale **(I):** 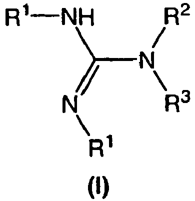 dans laquelle,
   - les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
   - le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
   - le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
   - lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, et
   - avec la condition supplémentaire que les radicaux R¹, R² et R³ ne comprennent pas d'atome de silicium,
b) puis on dépose de manière continue ou discontinue ladite composition silicone **X** sur ledit support souple **S**, et
c) on laisse réticuler ladite composition silicone **X** en présence d'humidité apportée par l'air ambiant ou par addition préalable d'eau de manière à former un élastomère silicone.

Pour atteindre cet objectif, la Demanderesse a eu le mérite de mettre en évidence, de manière tout à fait surprenante et inattendue, que les composés non silylé et répondant à la formule générale **(I)** permettent de permet de préparer des supports souples enduits d'un élastomère silicone ne contenant pas d'étain et présentant de bonnes propriétés mécaniques.

Il est aussi du mérite des inventeurs d'avoir vaincu le préjugé technique, tel qu'enseigné par exemple par la demande internationale WO 2004/020525, qui voulait que, jusqu'alors, les catalyseurs proches en terme de structure, tels que la 1,3-diphénylguanidine, la 1,3-di-o-tolylguanidine, la 1,3-diméthylguanidine ou la 1,1,3,3-tétraméthylguanidine devaient être associés à des réticulants spécifiques très réactif et coûteux (silanes à fonctions 1-méthylvinyloxy), pour réticuler des formulations de type RTV.

Les composés non silylés selon l'invention et répondant à la formule générale **(I)** sont des guanidines 1,2,3-trisubstituées et 1,2,3,3-tétrasubstituées et présentent l'avantage d'être liquides, incolores, inodores et solubles dans les matrices silicones. Les guanidines non silylées selon l'invention sont mises en oeuvre dans les systèmes silicones à réticuler à des teneurs très faibles, et permettent suivant la teneur d'adapter les temps de travail à l'application tout en garantissant des excellentes duretés des élastomères obtenus, ainsi qu'une excellente stabilité thermique éliminant ainsi les problèmes liés aux phénomènes de réversion.

Selon un mode de réalisation préféré, le catalyseur de polycondensation **A** est un composé organique non silylé répondant à la formule générale **(I)** et dans laquelle:
- les radicaux R₁, identiques ou différents, et le radical R₃ sont choisis, indépendamment les uns des autres, dans le groupe constitué par: un radical isopropyle, un radical cyclohexyle et un radical alkyle monovalent linéaire ou ramifié en C₁ - C₁₂.
- le radical R₂ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome, un groupe arylalkyle, un groupe fluoroalkyle, un groupe alkylamine ou alkylguanidine, et
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

Selon un mode de réalisation préféré, le catalyseur de polycondensation **A** est un composé organique non silylé choisi parmi le groupe constitué par les composés **(A1)** à **(A6)** suivants:

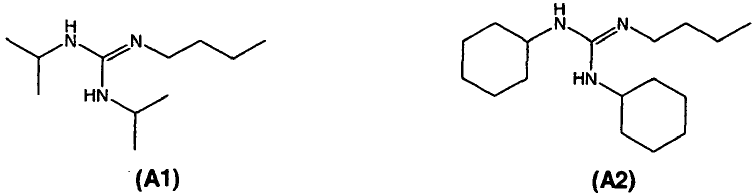

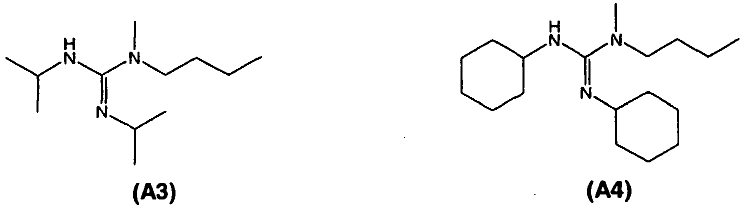

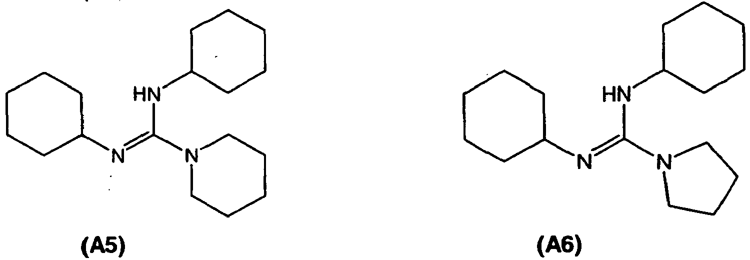

Les catalyseurs conformes à la présente invention sont non reprotoxiques, contrairement aux catalyseurs à base d'alkylétain. De plus, ils permettent, aussi bien pour des compositions monocomposantes ou bicomposantes, d'obtenir des joints d'étanchéités présentant une résistance améliorée aux fluides utilisés dans les groupes motopropulseurs par rapport à ceux obtenus à partir de composition classiques contenant des catalyseurs au titane ou à base d'alkylétain.

La quantité de catalyseurs de polycondensation **A** selon l'invention est généralement comprise entre 0,1 et 10 % en poids par rapport au poids total de la composition, de préférence entre 0,1 et 5 %, que ce soit une préparation mono ou bicomposante.

Les supports souples revêtus d'un film silicone anti-adhérent sont choisis parmi le groupe constitué par les supports en textile, en papier, en polychlorure de vinyle, en polyester, en polypropylène, en polyamide ; en polyéthylène ; en polyuréthanne, en tissus de fibres de verre non tissés ou en polyéthylène téréphtalate.

On entend par textile au sens de l'invention, un terme générique englobant toutes les structures textiles. Les textiles peuvent être constitués par des fils, fibres, filaments et/ou autres matières. Ils comprennent notamment les étoffes souples, qu'elles soient tissées, collées, tricotées, tressées, en feutre, aiguilletées, cousues, ou réalisées par un autre mode de fabrication.

Ces textiles peuvent être ajourés, c'est à dire comprendre des espaces libres non constitués de textile. Pour que l'enduction de la composition silicone de l'invention soit efficace, il est préférable que la plus petite des dimensions de ces espaces fibres soient inférieure à 5 mm, notamment inférieurs à 1 mm.

Selon l'invention, tout type de support souple **S** en textile peut être utilisé. A titre indicatif, on peut citer :
- les textiles naturels, tels que : les textiles d'origine végétale, comme le coton, le lin, le chanvre, la jute, la coco, les fibres cellulosique du papier ; et les textiles d'origine animale, comme la laine, les poils, le cuir et les soies ;
- les textiles artificiels, tels que : les textiles cellulosiques, comme la cellulose ou ses dérivés ; et les textiles protéiniques d'origine animale ou végétale ; et
- les textiles synthétiques, tels que le polyester, le polyamide, les alcools polymalliques, le chlorure de polyvinyle, le polyacrylonitrile, les polyoléfines, l'acrylonitrile, les copolymères (méth)acrylate-butadiène-styrène et le polyuréthane.

Les textiles synthétiques obtenus par polymérisation ou polycondensation peuvent notamment comprendre dans leur matrice différents types d'additifs, tels que des pigments, des délustrants, des matifiants, des catalyseurs, des stabilisants thermiques et/ou lumière, des agents anti-statiques, des ignifugeants, des agents anti-bactériens, anti-fongiques, et/ou anti-acariens.

Comme type de surfaces textiles, on peut citer notamment les surfaces obtenues par entrecroisement rectiligne des fils ou tissus, les surfaces obtenues par entrelacement curviligne des fils ou tricots, les surfaces mixtilignes ou tulles, les surfaces non tissées et les surfaces composites. Parmi la multitude de surfaces textiles possibles utilisables dans le procédé de l'invention, on peut mentionner les feutres, les denims, les tissés jacquards, les aiguilletés, les cousus, les crochetés, les grenadines, les dentelles et dentelés, les damas, les voiles, les alpagas, les barathéas, les basins, les bouclés, les brocarts, les calicots, les velours, les canevas, les chiffons, les flockés, les encollés, les étamines, les tressés, les failles, les foulards, les gazes, les géotextiles, les jaspés, les matelassés, les touffetés, les organzas, les plissés, les rubans, et les toiles.

Le support souple **S** en textile utilisé dans le procédé de la présente invention peut être constitué d'un ou plusieurs textiles, identiques ou différents, assemblés par diverses manières. Le textile peut être mono- ou multi-couche(s). Le support textile peut par exemple être constitué d'une structure multicouche pouvant être réalisé par différents moyens d'assemblage, tels que des moyens mécaniques comme la couture, le soudage, ou le collage par point ou continu.

Le support souple **S** en textile peut, outre le procédé d'enduction selon la présente invention, subir un ou plusieurs autres traitements subséquents, également appelés traitement de finition ou d'ennoblissement. Ces autres traitements peuvent être effectués avant, après et/ou pendant ledit procédé d'enduction de l'invention. Comme autres traitements subséquents, on peut notamment citer : la teinture, l'impression, le contrecollage, l'enduction, l'assemblage avec d'autres matériaux ou surfaces textiles, le lavage, le dégraissage, le préformage ou le fixage.

Selon une disposition préférée de réalisation de l'invention, le support souple S en textile est une dentelle ou une bande élastique.

Les textiles ainsi obtenus, tels quels ou transformés en articles textiles, peuvent être utilisés dans de nombreuses applications, telles que, par exemple, dans le domaine de l'habillement, notamment la lingerie comme les dentelles de hauts de bas ou de soutien-gorge, et les articles d'hygiène, tels que des bandes de contention ou des pansements. Ces articles textiles peuvent être repositionnés à différents endroits du corps ou d'un vêtement par exemple grâce à l'adhérence apportée par l'élastomère silicone.

En pratique, le taux de dépôt de silicone anti-adhérent est compris entre 0,1 et 1 de préférence 0,3 et 0,5 g/m², ce qui correspond à des épaisseurs de l'ordre du micromètre.

### Description de la base silicone B :

Dans la suite de la présente demande, on décrira de façon conventionnelle les polyorganosiloxanes linéaires, les polyorganosiloxanes de structure branchés et les résines polyorganosiloxanes à l'aide des notations usuelles suivantes, utilisées pour désigner divers motifs siloxyles de formule M, D, T et Q suivantes :

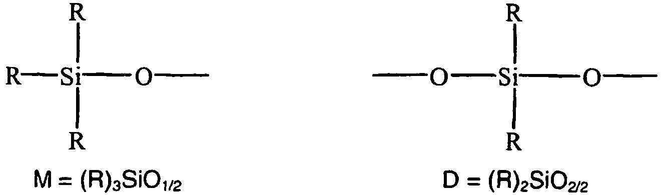

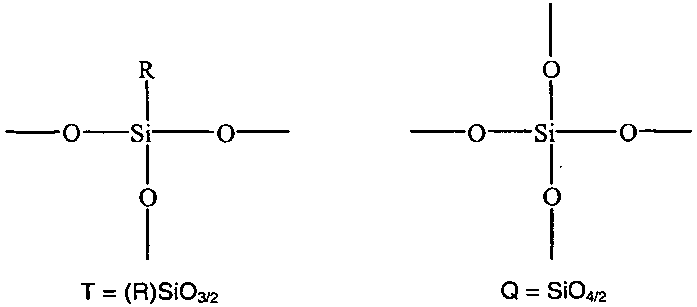

Dans ces formules, R peut représenter divers groupes hydrocarbonés saturés ou insaturés, notamment aromatiques, et éventuellement substitués par des hétéro-atomes, ainsi que des groupes non hydrocarbonés.

Conventionnellement, dans cette notation, les atomes d'oxygène sont partagés entre deux atomes de silicium. Conventionnellement, on indique un groupe R particulier en le citant en exposant après le symbole M, D ou T. Par exemple M^{OH} représente un motif M où un groupe R est une groupe hydroxyle -OH.

Par « substantiellement linéaire », il faut comprendre une huile POS composée de motifs siloxyles D comprenant en outre des motifs siloxyles T et/ou des motifs siloxyles Q, le nombre de motifs siloxyles T et Q étant inférieur ou égal à un pour cent atomes de silicium.

Les bases silicones utilisées dans la présente invention réticulant et durcissant par des réactions de polycondensation sont bien connues. L'expression « huile polyorganosiloxane réticulable par réaction de polycondensation» ne comprend pas les polymères organiques ayant des groupements silicés réticulables par polycondensation tels que ceux décrits par exemple dans la demande de brevet EP-A1-1 985666 à la page 4, lignes 7 à 52.

Les bases silicones selon l'invention sont décrites en détail en particulier dans de nombreux brevets et elles sont disponibles dans le commerce.

Ces bases silicones peuvent être mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes peuvent être utilisées des bases bi-composantes, c'est-à-dire conditionnées en deux emballages, qui durcissent dès le mélange des deux parties. Elles sont conditionnées après incorporation du catalyseur en deux fractions, séparées, l'une des fractions pouvant ne renfermer par exemple que le catalyseur selon l'invention ou un mélange avec l'agent réticulant.

Selon un autre mode de réalisation préféré, la composition polyorganosiloxane **X** selon l'invention telle que décrite ci-dessus est caractérisée en ce qu'elle comprend outre une quantité catalytiquement efficace d'au moins un catalyseur de polycondensation **A** selon l'invention, et tel que défini dans la présente demande, et une base silicone **B** comprenant:
- au moins une huile polyorganosiloxane **C** susceptible de réticuler par polycondensation en un élastomère;
- éventuellement au moins un agent de réticulation **D**;
- éventuellement au moins un promoteur d'adhérence **E**; et
- éventuellement au moins une charge minérale siliceuse, organique et/ou non siliceuse **F**.

Selon un mode de réalisation particulièrement préféré, la composition polyorganosiloxane **X** réticulable en élastomère par des réactions de polycondensation comprend:
- pour 100 parties en poids d'au moins une huile polyorganosiloxane **C** susceptible de réticuler par polycondensation qui est un polymère réactif α,ω-dihydroxydiorganopolysiloxane dont les radicaux organiques sont des radicaux hydrocarbonés de préférence choisi parmi le groupe constitué par: les alkyles ayant de 1 à 20 atomes de carbone ; les cycloalkyles ayant de 3 à 8 atomes de carbone ; les alcényles ayant de 2 à 8 atomes de carbone et les cycloalcényles ayant de 5 à 8 atomes de carbone ;
- de 0,1 à 60 parties en poids d'au moins un agent de réticulation **D** choisi parmi le groupe constitué par: les polyalcoxysilanes et les produits provenant de l'hydrolyse partielle d'un polyalcoxysilane;
- de 0 à 60 parties en poids d'un promoteur d'adhérence **E** tel que décrit ci-dessous;
- de 0 à 250 parties en poids, de préférence de 5 à 200 parties en poids, d'au moins une charge minérale siliceuse, organique et/ou non siliceuse **F**;
- de 0 à 10 parties en poids d'eau,
- de 0 à 100 parties en poids d'au moins un polymère polyorganosiloxane linéaire non réactif **G** consistant dans un homopolymère ou copolymère linéaire dont, par molécule, les substituants organiques monovalents, identiques ou différents entre eux, liés aux atomes de silicium sont choisis parmi les radicaux alkyles, cycoalkyles, alcényles, aryles, alkylarylènes et arylalkylènes,
- de 0 à 20 parties en poids d'une base colorante ou d'un agent de coloration **H**,
- de 0 à 70 parties en poids de résines polyorganosiloxanes **I**, et
- de 0 à 20 parties d'additifs auxiliaires **J** connus de l'homme de métier, tels que des agents plastifiant ; des diluants organiques, des ralentisseurs de réticulation, des huiles minérales, des agents antimicrobien, des additifs de tenue thermique tels que les oxydes de titane, de fer ou de cérium, et
- de 0,1 à 50 parties en poids d'au moins un catalyseur de polycondensation **A** selon l'invention et tel que défini dans la présente demande

Selon un autre mode de réalisation préféré, l'huile polyorganosiloxane **C** présente des extrémités fonctionnalisées de type alcoxy et est préparée in situ par réaction, en présence d'une quantité catalytiquement efficace de lithine, d'un polydiméthylsiloxane branché présentant des groupements hydroxyles liés à un atome de silicium et de formule générale MₓD_{y}Q_{z} (x, y et z étant des nombres entiers) ou d'un diorganopolysiloxane linéaire, comprenant un groupement hydroxyle lié à un atome de silicium à chaque extrémité de chaîne, avec au moins un polyalcoxysilane de formule **(II)** suivante:

(R⁴)_{c} (R⁵)ₐ Si (OR⁶)_{4-(a+c)} **(II)**

dans laquelle:
- a est égal à 0, 1 ou 2,
- c est égal à 0, 1 ou 2,
- la somme a + c est égale à 0, 1 ou 2,
- R⁴ représente un radical monovalent hydrocarboné saturé ou non en C₁ à C₁₃, substitué ou non, aliphatique, cyclanique ou aromatique, R⁴ pouvant être identique à R⁵
- R⁵ représente un radical monovalent hydrocarboné saturé ou non en C₁ à C₁₃, substitué ou non substitué, aliphatique, cyclanique ou aromatique, et pouvant comporter une fonction époxy, amine primaire, secondaire, tertiaire, mercapto, et
- R⁶ représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone, étant entendu que les groupements alcoxy du silane de formule **(II)** peuvent avoir chacun une signification différente pour R⁶ ou la même signification.

Selon un autre mode de réalisation préféré, l'huile polyorganosiloxane **C** est de préférence un polymère α,ω-dihydroxypolydiorganosiloxane, de viscosité comprise entre 50 et 5 000 000 mPa.s à 25°C et l'agent de réticulation **D** est de préférence un composé organosilicié portant plus de deux groupes hydrolysables liés aux atomes de silicium par molécule.

L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables (ou par hydrosilylation de fonctions =SiVinyl ou =SiH terminales). Des polyorganosiloxane branchés peuvent aussi être envisagés, comprenant éventuellement des groupements alkylsilyl en milieu et/ou bout de chaîne, c'est-à-dire des polyorganosiloxanes présentant des groupements susceptibles de réagir par des réactions de polycondensation en milieu et/ou en bout de chaînes et des groupements alkyles "inter-chaîne" reliant deux chaînes polyorganosiloxanes entre elles.

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

L'agent de réticulation **D** présente au moins un groupe hydrolysable tel que :
- acyloxy de formule -O-CO-R'
- alcoxy de formule -O-R'
- amino de formule -NR¹R²
- amido de formule -NR¹COR²
- alcényloxy de formule -O-CR¹=CHR²
- aminoxy de formule -O-NR¹R²
- cétiminoxy de formule -O-N=CR¹R² ou 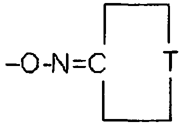
où R' représente un radical alkyle ou aryle ayant de 1 à 15 atomes de carbone, R¹ et R², identiques ou différents, représentent des radicaux alkyle ou aryle contenant de 1 à 8 atomes de carbone et T un radical alkylène contenant de 4 à 8 atomes de carbone. Parmi les radicaux R', R¹ et R², on peut citer tout particulièrement les radicaux: méthyle, éthyle, cyclohexyle et phényle. Parmi les radicaux T on peut citer tout particulièrement ceux de formule: -(CH₂)₄ -, -(CH₂)₅- et -(CH₂)₆-.

A titre d'exemple d'alcoxysilanes, on peut citer ceux de formule:

Si(OCH3)4

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂

(CH₃O)₃Si(CH₂-CH=CH₂)

(CH₃O)₃Si[CH₂-(CH₃)C=CH_{2]}

(C₂H_{S}O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

Les réticulants cétiminoxysilane sont bien connues depuis longtemps. Ils sont par exemple décrits dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

A titre d'exemple de cétiminoxysilanes, on peut citer ceux de formule:

CH₃Si[-O-N=C(CH₃)₂]₃,

CH₃Si[-O-N=C(CH₃)C₂H₅]₃,

CH₂=CHSi[-O-N=C(CH₃)C₂H₅]₃,

C₆H₅Si[-O-N=C(CH₃)₂]₃,

CH₃Si[-O-N=C(C₂H₅)(CH₂)₃CH₃]₃,

(CH₃)₂C=N-O-] Si[-O-N=C(CH₃)C₂H₅]₃,

CH₃Si[-O-N=C(CH₃CH(C₂H₅)(CH₂)₃CH₃]₃,

CH₃Si[-O-N=C(CH₃CH(C₂H₅)(CH₂)₃CH₃]₃,

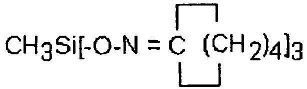

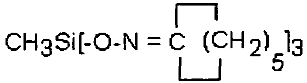

Les réticulants acyloxysilanes sont bien connus depuis longtemps. Ils sont décrits notamment dans les brevets US-A-3 077 465, US-A-3 382 205, US-A-3 701 753, US-A-3 957 714, US-A-4 115 356, US-A-4 273 698, FR-A-2 429 811 et FR-A-2 459 820.

A titre d'exemple d'acyloxysilanes, on peut citer ceux de formule:

CH₃Si(OCOCH₃)₃,

C₂H₅Si(OCOCH₃)₃

CH₂=CHSi(OCOCH₃)₃

C₆H₅Si(OCOCH₃)₃,

CH₃Si[OCOCH(C₂H₅)-(CH₂)₃-CH₃]

CF₃CH₂CH₂Si(OCOC₆H₅)₃

CH₃Si(OCOCH₃)₂[OCOH(C₂H₅)-(CH₂)₃-CH₃]

CH₃COOSi[OCOCH(C₂H₅)-(CH₂)₃-CH₃]

A titre d'autres exemples d'agent de réticulation **D** on peut citer:
- les silanes et les produits d'hydrolyse partielle de ce silane de formule générale suivante :

   R¹ₖ Si(OR²)₍₄₋ₖ₎

   dans laquelle:
   - les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, et
   - le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2 ; et

Parmi les agents de réticulation **D**, on préfère plus particulièrement les alcoxysilanes, les cétiminoxysilanes, les silicates d'alkyle et les polysilicates d'alkyle, dans lesquels les radicaux organiques sont des radicaux alkylés ayant de 1 à 4 atomes de carbone.

Comme autres exemples d'agent de réticulation **D**, on peut citer le polysilicate d'éthyle, ou le polysilicate de n-propyle.
On utilise généralement de 0,1 à 60 parties en poids d'agent de réticulation **D** pour 100 parties en poids de polyorganosiloxane **C** susceptible de réticuler par polycondensation en un élastomère.

Ainsi la composition selon l'invention peut comprendre au moins un promoteur d'adhérence E tel que par exemple les composés organosiliciques portant à la fois :
(1) un ou des groupes hydrolysables liés à l'atome de silicium, et
(2) un ou des groupes organiques substitués par des radicaux comprenant un ou plusieurs atome(s) d'azote, hétéroatomes S ou O) des groupements mercaptan, urée ou isocyanurate) ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),

      [H₂N(CH₂)₃]Si(OCH₂CH₂CH₃)₃,

      [H₂N(CH₂)₃]Si(OCH₃)₃

      [H₂N(CH₂)₃]Si(OC₂H₅)₃

      [H₂N(CH₂)₄]Si(OCH₃)₃

      [H₂NCH₂CH(CH₃)CH₂CH₂]SiCH₃(OCH₃)₂

      [H₂NCH₂]Si(OCH₃)₃

      [n-C₄H₉-HN-CH₂]Si(OCH₃)₃

      [H₂N(CH₂)₂NH(CH₂)₃]Si(OCH₃)₃

      [H₂N(CH₂)₂NH(CH₂)₃]Si(OCH2CH₂OCH₃)₃

      [CH₃NH(CH₂)₂NH(CH₂)₃]Si(OCH₃)₃

      [H(NHCH₂CH₂)₂NH(CH₂)₃]Si(OCH₃)₃

      HS(CH₂)₃Si(OCH₃)₃

      NH2CONH2(CH₂)₃Si(OCH₃)₃ 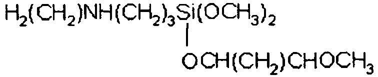 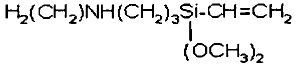
   ou des oligomères polyorganosiloxaniques contenant de tels groupes organiques à une teneur supérieure à 20%.

A ces bases monocomposantes peuvent être ajoutés des promoteurs d'adhérence **E** choisis par exemple parmi les composés organosiliciés portant à la fois, d'une part, des groupes organiques substitués par des radicaux choisis dans le groupe des radicaux amino, uréido, isocyanate, époxy, alkènyle, isocyanurate, hydentoile, guanidino et mercaptoester et, d'autre part des groupes hydrolysables, en général des groupes alcoxy liés aux atomes de silicium. Des exemples de tels agents d'adhérence sont décrits dans les brevets américains US 3 517 001, US 4 115 356, US 4 180 642, US 4 273 698, US 4 356 116 et dans les brevets européens EP 31 996 et EP 74 001.

Pour les bases mono- et bi-composantes, on utilise comme charges minérales **F** des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium éventuellement traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g. Ces charges peuvent avoir été traitées en surface

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les cocktails d'oxydes décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- 100 parties d'huile polyorganosiloxane **C** susceptible de réticuler par polycondensation en un élastomère ;
- 0 à 20 parties d'un agent de réticulation **D**;
- 0 à 20 parties d'un promoteur d'adhérence **E**; et
- 0 à 50 parties de charge **F**.

Outre les constituants principaux, des polymères polyorganosiloxanes linéaires non réactifs **G** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties d'huile polyorganosiloxane **C** susceptible de réticuler par polycondensation.

Les compositions selon l'invention peuvent en outre avantageusement comprendre au moins une résine silicone **H**. Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R"'₂SiO_{2/2} (motif D), R"'SiO_{3/2} (motif T) et SiO_{4/2} (motif Q). Les radicaux R"' sont identiques ou différents et sont choisis parmi les radicaux alkyles linéaires ou ramifiés présentent de 1 à 10 atomes de carbone, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle.

Comme exemple de résines, on peut citer les résines MQ, les résines MDQ, les résines DT et les résines MDT.

Pour fabriquer les compositions conformes à l'invention, il est nécessaire dans le cas des compositions monocomposantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Il est possible de mélanger tout d'abord les huiles organopolysiloxanes **C** et les charges **F** et d'ajouter ensuite à l'empâtage obtenu les réticulants **D**, les composés **E** et le catalyseur selon l'invention. Il est également possible de mélanger les huiles **C**, les réticulants **D**, les composés **E** et les charges **F** et d'ajouter ultérieurement le catalyseur selon l'invention. Au cours de ces opérations, les mélanges peuvent être chauffés à une température comprise dans l'intervalle 50-180°C sous la pression atmosphérique ou sous une pression réduite afin de favoriser le départ de matières volatiles. Selon une variante, des huiles silicones à motifs alcoxy sont préparées in situ par une réaction de fonctionnalisation d'une huile α,ω-dihydroxypolydiméthylsiloxane par réaction avec un silane ou un polyalcoxysilane en présence d'une quantité catalytiquement efficace de lithine (procédé décrit dans la demande FR-2638752.

Les compositions monocomposantes, conformes à l'invention, utilisées telles quelles, c'est-à-dire non diluées, ou sous forme de dispersions dans des diluants, sont stables au stockage en l'absence d'eau et durcissent dès les basses températures (après départ des solvants dans le cas des dispersions) en présence d'eau pour former des élastomères.

Après le dépôt des compositions telles quelles, sur des substrats solides, en atmosphère humide, on constate qu'un processus de durcissement en élastomère se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

La fabrication des compositions bicomposantes conformes à l'invention s'effectue également par mélange des divers constituants dans des appareils appropriés. Pour obtenir des compositions homogènes, il est préférable de mélanger tout d'abord les polymères **A** avec les charges **C ;** l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants, le catalyseur et éventuellement des additifs et adjuvants divers et même de l'eau.

Selon un autre mode de réalisation particulièrement préféré, la composition polyorganosiloxane **X** réticulable en élastomère par des réactions de polycondensation est préparée à partie d'un système bicomposant qui se présente en deux parties **P1** et **P2** distinctes destinées à être mélangées pour former ladite composition **X**, avec l'une de ces parties comprenant le catalyseur de polycondensation **A** selon l'invention et tel que décrit dans la présente demande et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère, et
- de 0.001 à 10 partie(s) en poids d'eau.

Selon un autre mode de réalisation particulièrement préféré, la composition polyorganosiloxane **X** réticulable en élastomère par des réactions de polycondensation est préparée à partie d'un système monocomposant stable au stockage en l'absence d'humidité et réticulant, en présence d'eau, en élastomère, comprend:
- au moins une huile polyorganosiloxane **C** linéaire réticulable présentant des extrémités fonctionnalisées de type alcoxy, oxime, acyle et /ou énoxy, de préférence alcoxy,
- au moins un agent de réticulation **D**,
- au moins une charge **F**, et
- au moins un catalyseur de la réaction de polycondensation qui est le catalyseur de polycondensation **A** selon l'invention et tel que décrit dans la présente demande.

Des bases monocomposantes sont décrites en détail par exemple dans les brevets EP 141 685, EP 147 323, EP 102 268, EP 21 859, FR 2 121 289 et FR 2 121 631, cités en référence.

Des bases bicomposantes sont décrites en détail par exemple dans les brevets EP 118 325, EP 117 772, EP 10 478, EP 50 358, EP 184 966, US 3 801 572 et US 3 888 815, cités comme référence.

Selon un mode de réalisation particulièrement avantageux de l'invention, la composition polyorganosiloxane **X** réticulable en élastomère par des réactions de polycondensation comprend une quantité suffisante d'au moins un agent thixotropant **K** afin de présenter des propriétés thixotropes.

On entend au sens de l'invention par composition silicone thixotrope, une composition présentant une thixotropie, définie comme étant un comportement rhéologique d'une matière soumise à un cisaillement amenant à une déstructuration progressive de ladite matière. La thixotropie est ainsi un phénomène réversible qui permet d'obtenir une composition sous forme de gel au repos et qui se liquéfie lorsqu'elle est soumise à une agitation ou un cisaillement. Un matériau thixotrope voit ainsi sa viscosité diminuer lorsque le cisaillement qui lui est appliqué augmente, et qui revient à des conditions initiales de viscosité lorsque l'on cesse d'appliquer un cisaillement, au bout d'un certain temps (voir l'ouvrage Rheology Handbook : "A practical Guide to Rheological Additives", Rheox, Inc., 1998).

L'addition d'un agent thixotropant **K** permet de contrôler la rhéologie des compositions polyorganosiloxane **X** réticulable en élastomère et, en particulier, permet de conférer à ces dernières un comportement viscoélastique non coulant.

Les agents thixotropants sont biens connus du domaine. On peut citer à ce titre les différents agents épaississants organiques et inorganiques utilisés couramment dans les compositions silicones.

L'agent thixotropant **K** selon l'invention est préférentiellement choisi dans le groupe constitué par:
- les épaississants inorganiques, l'acide borique et les borates, les titanates, les aluminates, les zirconates ;
- les composés portant des groupements hydroxyles ;
- les composés à base de polyéthylène et/ou polypropylène ;
- les composés comprenant des fonctions amines cycliques;
- les composés de type polyéther ou comprenant des groupements polyéther, et
- les résines fluorées, de préférence à base de polyfluoroéthylène (PFE) et plus préférentiellement encore à base de polytétrafluoroéthylène (PTFE ou téflon®).

Comme composés portant des groupements hydroxyles, on peut citer notamment les silicones hydrophiles portant des groupements hydroxyles, tels que les polydiméthylsiloxanes ou polyméthylphenylsiloxanes ou polydiphenylsiloxanes ou leurs copolymères à terminaisons diméthylhydroxy ; ou les résines silicones de type "MDT" hydroxylées.

Comme composés à base de polyéthylène et/ou polypropylène, on peut citer les cires cristallines de polyethylène ou de polypropylène portant éventuellement des groupements fluorés (Crayvallac^{®}).

Au sens de l'invention, on entend par "résine fluorée" tout polymère fluoré contenant des liaisons C-F (voir par exemple l'ouvrage "Encyclopedia of Chemical Technology" - 4ème édition, 1994, Vol.11 -p. 621-721) tels que par exemple:
- un polyfluorure de vinyle,
- un polyfluorure de vinylidène,
- un polytétrafluoroéthylène (PTFE),
- un polymonochlorotrifluoroéthylène,
- un polyfluoropolyéthers,
- un copolymère d'éthylène et de tétrafluoroéthylène,
- un copolymère de tétrafluoroéthylène et de perfluorovinyléther, et
- un copolymère d'éthylèneperfluoro et de propylèneperfluoro.

Toutes les viscosités dont il est question dans le présent mémoire correspondent à une grandeur de viscosité dynamique qui est mesurée, de manière connue en soi, à 25°C, avec un appareil de type Brookfield, selon la norme AFNOR NFT 76 102 de février 1972. S'agissant de produits très fluides, la viscosité dont il est question dans le présent exposé est la viscosité dynamique à 25°C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Selon un mode de réalisation préféré de l'invention, à l'étape b) on dépose ladite composition silicone **X** sur le support souple **S** par transfert, par rouleau lécheur ou par pulvérisation à l'aide d'une buse, d'une racle, d'un cadre rotatif ou d'un rouleau inverse «reverse roll ». L'épaisseur de la couche de la composition silicone **X** déposée sur le textile est comprise entre 0,1 et 0,5 mm, de préférence entre 0,1 et 0,4 mm et plus préférentiellement encore entre 0,1 et 0,3 mm.

Un autre objet de l'invention concerne l'utilisation de la composition silicone **X** telle que définie ci-dessus pour enduire un support souple **S** en textile et plus particulièrement une dentelle ou une bande élastique.

Le dernier objet de l'invention concerne l'utilisation de la composition silicone **X** telle que définie ci-dessus pour enduire un support souple **S** en papier, en polychlorure de vinyle, en polyester, en polypropylène, en polyamide; en polyéthylène; en polyuréthanne, en tissus de fibres de verre non tissés ou en polyéthylène téréphtalate.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales. Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### EXEMPLES:

### I) Préparation des catalyseurs selon l'invention

a) 1-butyl-2,3-diisopropylguanidine **(A1)** : 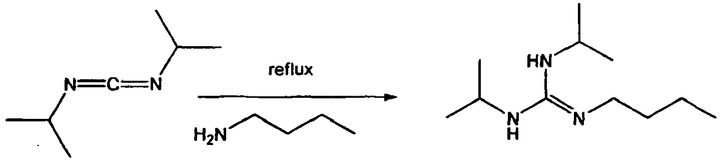 Un mélange de 33 g de N-butylamine (0,45 mol) et de 19 g de diisopropylcarbodiimide (0,15 mol) est chauffé à reflux 3h30. L'analyse par CPG montre alors une conversion supérieure à 99.5 % de la diisopropylcarbodiimide. Le mélange final incolore est concentré à 60°C sous 20 mbar pendant 2 h pour donner 29 g d'un liquide incolore et pratiquement inodore de faible viscosité, correspondant à la guanidine attendue (rendement 96.7 %).
   RMN ¹H/CDCl₃ (ppm) : 0.93 (3 H, t), 1.14 (12 H, d), 1.37 (2 H, sex), 1.52 (2 H, quint), 3.01 (2 H, t), 3.57 (2 H, m).
b) 1-butyl-2,3-diisopropyl-1-méthylguanidine **(A3)** : 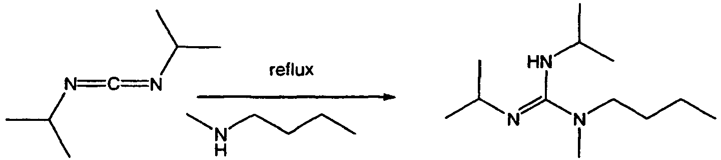 Un mélange de 32.68 g de N-butyl-N-méthylamine (0,375 mol) et de 23.66 g de diisopropylcarbodiimide (0,1875 mol) est chauffé à reflux 3h. L'analyse par CPG montre alors une conversion supérieure à 99.5 % de la diisopropylcarbodiimide. Le mélange final incolore est concentré à 60°C sous 5 mbar pendant 2 h pour donner 40 g d'un liquide incolore et pratiquement inodore de faible viscosité, correspondant à la guanidine attendue (rendement 100 %).
   RMN ¹H/CDCl₃ (ppm) : 0.88 (3 H, t), 1.06 (12 H, d), 1.26 (2 H, sex), 1.46 (2 H, quint), 2.67 (3 H, s), 3.05 (2 H, t), 3.35 (2 H, m).
c) 1-butyl-2,3-dicyclohexylguanidine **(A2)** RN-CAS = 60006-40-8 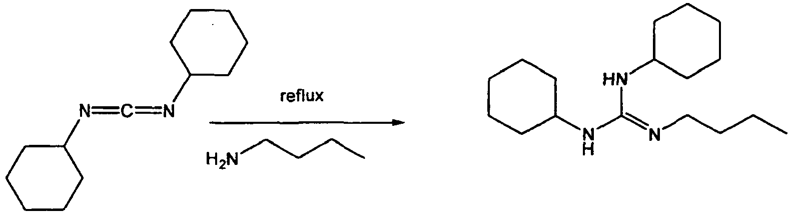 Un mélange de 15.69 g de N-butylamine (0,214 mol) et de 22.13 g de dicyclohexylcarbodiimide (0,107 mol) est chauffé à reflux 2h. L'analyse par CPG montre alors une conversion supérieure à 99.6 % de la dicyclohexylcarbodiimide. Le mélange final incolore est concentré à 60°C sous 1 mbar pendant 2 h pour donner 29.7 g d'un liquide incolore et pratiquement inodore moyennement visqueux, correspondant à la guanidine attendue (rendement 99 %).
d) 1-butyl-2,3-dicyclohexyl-1-méthylguanidine **(A4)**: 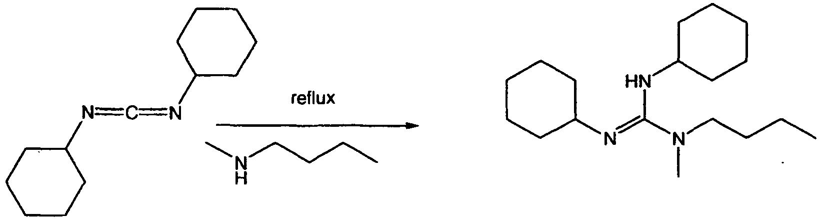 Un mélange de 17.78 g de N-butyl-N-méthylamine (0,204 mol) et de 21.05 g de dicyclohexylcarbodiimide (0,102 mol) est chauffé à reflux 3h. L'analyse par CPG montre alors une conversion supérieure à 99.5 % de la dicyclohexylcarbodiimide. Le mélange final incolore est concentré à 60°C sous 1 mbar pendant 2 h pour donner 29.9 g d'un liquide incolore et pratiquement inodore moyennement visqueux, correspondant à la guanidine attendue (rendement 99.7 %).
   RMN ¹H/CDCl₃ (ppm) : 0.89 (3 H, t), 1-1.4 (10 H, m), 1.47 (2 H, quint), 1.5-2 (12 H, plusieurs m), 2.67 (3 H, s), 2.90 (1 H, m), 2.97 (1 H, m), 3.06 (2 H, t).
e) 1,2-Dicyclohexyl-3-pipéridylguanidine **(A5)** RN-CAS 60006-25-9 : 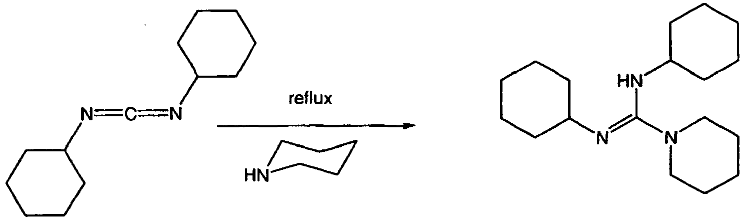 Un mélange de 11.69 g de pipéridine (0,137 mol) et de 14.16 g de dicyclohexylcarbodiimide (0,0686 mol) est chauffé à reflux 3h30. L'analyse par CPG montre alors une conversion supérieure à 99.7 % de la dicyclohexylcarbodiimide. Le mélange final incolore est concentré à 60°C sous 1 mbar pendant 2 h pour donner 19.9 g d'un liquide incolore et pratiquement inodore très visqueux, correspondant à la guanidine attendue (rendement 99.5 %).
f) 1,2-Dicyclohexyl-3-pyrrolidylguanidine **(A6)** RN-CAS 60006-28-2 : 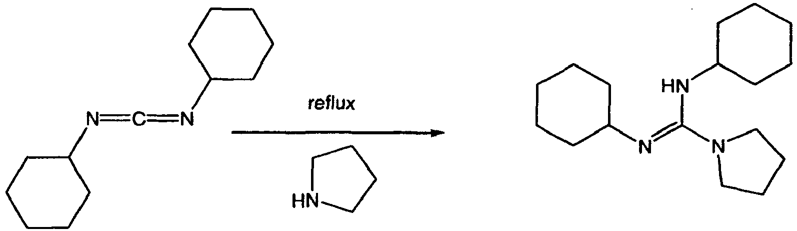 Un mélange de 19.2 g de pyrrolidine (0,27 mol) et de 18.6 g de dicyclohexylcarbodiimide (0,09 mol) est chauffé à reflux 4h. L'analyse par CPG montre alors une conversion supérieure à 99.8 % de la dicyclohexylcarbodiimide. Le mélange final incolore est concentré à 60°C sous 1 mbar pendant 1 h pour donner 24.9 g d'un liquide incolore et pratiquement inodore moyennement visqueux, correspondant à la guanidine attendue (rendement 99.6 %).

### II. Préparation de compositions mono-composantes

### a) Test en empâtage - réticulant vinyltriméthoxysilane

L'empâtage utilisé est préparé comme suit : à un mélange de 3464 g d'une huile α,ω-dihydroxylée de viscosité de 20000 centipoises contenant 0.066% d'OH, et de 120 g de vinyltriméthoxysilane sous agitation, est ajouté 16 g d'une solution de lithine à 2 % en poids dans le méthanol, puis après 5 min, 400 g de silice de pyrogénation AE55 sont ajoutés. Le mélange est dévolatilisé sous vide puis stocké à l'abri de l'humidité.
Pour chaque test, le catalyseur testé est mélangé à 50 g de cet empâtage, puis le potentiel catalytique est évalué de 3 façons :
- le temps de formation de peau (TFP), temps au bout duquel on observe une réticulation en surface, sur film de 2 mm,
- la persistance d'un toucher collant à 48h,
- la dureté (en Shore A) d'un cordon de 6 mm d'épaisseur dans des conditions régulées (23°C et 50% d'humidité relative) et sur des temps croissants (2, 3, 4, 7 et 14 jours), ainsi que après 7 jours (7J) à température ambiante (TA) suivi de 7 jours à 100°C. Dans les tableaux de résultats, le symbole « > » correspond aux valeurs de dureté mesurées sur la partie supérieure du cordon et le symbole « < » correspond aux valeurs de dureté mesurées sur la partie inférieure du cordon moins exposée à l'air ambiant que la partie supérieure.

Différents catalyseurs selon l'invention ont été testés. A titre comparatif, comme précédemment, ont été également testés:
- un catalyseur à base d'étain: le dilaurate de dibutylétain (DLBDE), et
- la 1,1;3,3-tétraméthylguanidine (TMG) qui est décrite dans la demande internationale WO 2004/020525. Les résultats sont indiqués dans le tableau I ci-dessous:

**Tableau 1**

| **Référence** | **Structure** | **mol/Sn** | **% poids** | **TFP baton** | **Toucher collant à 48h** | **Dureté Shore A sur 6mm** | | | | | | | | | | | |
|---|---|---|---|---|---|---|---|---|---|---|---|---|---|---|---|---|---|
| | | | | | | **2J** | | **3J** | | **4J** | | **7J** | | **14J** | | **7J TA + 7J 100°C** | |
| | | | | **min** | | **>** | **<** | **>** | **<** | **>** | **<** | **>** | **<** | **>** | **<** | **>** | **<** |
| **Comparatif (DLDBE)** | | 1 | 0,88 | 10 | non | 34 | 26 | 35 | 30 | 35 | 30 | 35 | 29 | 35 | 30 | 35 | 28 |
| **Comparatif (TMG)** | 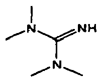 | 4 | 0,64 | 2 | oui | 2 | 1 | 2 | 1 | | / | 4 | 3 | 2 | 1 | 1 | 1 |
| **Invention (A1)** | 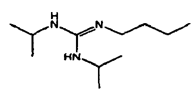 | 3 | 0.84 | 1 | non | 36 | 26 | 36 | 28 | 37 | 28 | 38 | 28 | 38 | 30 | 34 | 27 |
| | | 1,5 | 0,42 | 2 | non | 35 | 22 | 36 | 26 | 36 | 27 | 37 | 28 | 39 | 28 | 36 | 26 |
| | | 0,75 | 0,21 | 2 | oui | 30 | 4 | 32 | 6 | 33 | 9 | 35 | 14 | 37 | 21 | 35 | 21 |
| **Invention (A2)** | 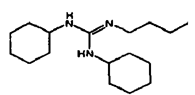 | 1,5 | 0,59 | 1 | non | 34 | 27 | 35 | 28 | 35 | 30 | 36 | 30 | 37 | 31 | 31 | 25 |
| **Invention (A3)** | 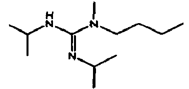 | 3 | 0,9 | 3 | non | 35 | 27 | 36 | 29 | 36 | 29 | 35 | 29 | 37 | 31 | 37 | 30 |
| | | 1,5 | 0,46 | 5 | non | 35 | 21 | 37 | 28 | 37 | 30 | 37 | 30 | 39 | 31 | 37 | 31 |
| | | 0,75 | 0,23 | 6 | oui | 31 | 12 | 33 | 21 | 35 | 24 | 36 | 27 | 39 | 30 | 37 | 27 |
| | | 0,375 | 0,11 | 12 | oui | 22 | 4 | 26 | 6 | 28 | 10 | 28 | 13 | 32 | 23 | 31 | 21 |
| **Invention (A4)** | 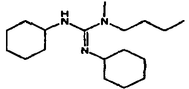 | 0,75 | 0,31 | 5 | non | 35 | 24 | 36 | 28 | 37 | 29 | 37 | 29 | 37 | 30 | 37 | 30 |
| | | 0,375 | 0,15 | 7 | non | 30 | 13 | 32 | 19 | 33 | 23 | 34 | 26 | 35 | 28 | 35 | 29 |

La 1,1,3,3-tétraméthylguanidine (TMG) ne permet pas la réticulation de l'huile silicone, pourtant à des concentrations molaires bien supérieures aux guanidines selon l'invention **(A1)** à **(A4)**. Les guanidines 1,2,3-trisubstituées **(A1)** et **(A2)** conduisent à des temps de formation de peau très courts et à des élastomères. Les guanidines 1,2,3,3-tétrasubstituées **(A3)** et **(A4)** permettent non seulement en adaptant les teneurs jusqu'à des valeurs très faibles de moduler les durées des temps de formation de peau tout en obtenant des élastomères très stables thermiquement et de niveaux de réticulation légèrement plus élevés qu'avec le catalyseur à l'étain (DLDBE). Ces résultats montrent que les catalyseurs selon l'invention **(A1)** à **(A4)**, non toxiques, conduisent à une catalyse plus efficace que les catalyseurs à base d'étain (DLDBE) et que la tétraméthylguanidine (TMG). Les catalyseurs selon l'invention peuvent donc avantageusement remplacer les catalyseurs existants.

### b) Test en empâtage - réticulant vinyltriéthoxysilane

L'empâtage utilisé est préparé comme suit : à un mélange de 857.5 g d'une huile α,ω-dihydroxylée de viscosité de 20000 centipoises contenant 0.066% d'OH, et de 38.5 g de vinyltriéthoxysilane sous agitation est ajouté 4 g d'une solution de lithine à 4 % en poids dans le méthanol, puis après 20 min, 100 g de silice de pyrogénation AE55 sont ajoutés. Le mélange est dévolatilisé sous vide puis stocké à l'abri de l'humidité. Pour chaque test, le catalyseur testé est mélangé à 50 g de cet empâtage, puis le potentiel catalytique est évalué de la même façon que précédemment.

Différents catalyseurs selon l'invention ont été testés.
A titre comparatif, comme précédemment, a été également testé:
- un catalyseur à base d'étain: le dilaurate de dibutylétain (DLDBE).

Les résultats sont indiqués dans le Tableau II ci-dessous:

**Tableau II**

| **Référence** | **Produit** | **nb éq** | **% poids** | **TFP baton** | **Toucher collant à 48h** | **Dureté Shore A sur 6mm** | | | | | | | | | | | |
|---|---|---|---|---|---|---|---|---|---|---|---|---|---|---|---|---|---|
| | | **1 éq = 0,70 mM** | | | | **2J** | | **3J** | | **4J** | | **7J** | | **14J** | | **7J TA + 7J 100°C** | |
| | | | | **min** | | **>** | **<** | **>** | **<** | **>** | **<** | **>** | **<** | **>** | **<** | **>** | **<** |
| **Comparatif** | DLDBE | 1 | 0,9 | 60 | non | 10 | 7 | 16 | 12 | 20 | 16 | 26 | 22 | 32 | 29 | 33 | 29 |
| **Invention A1** | 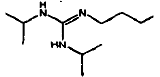 | 3 | 0,8 | 4 | non | 28 | 16 | 31 | 22 | 32 | 24 | 33 | 26 | 33 | 27 | 32 | 25 |
| | | 1,5 | 0,5 | 5 | non | 18 | 7 | 21 | 12 | 23 | 14 | 26 | 17 | 30 | 22 | 28 | 20 |
| **Invention A3** | 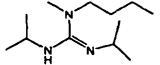 | 3 | 0,9 | 12 | non | 29 | 17 | 31 | 24 | 31 | 26 | 32 | 28 | 33 | 28 | 34 | 30 |
| | | 1,5 | 0,5 | 20 | oui | 18 | 9 | 23 | 16 | 26 | 21 | 31 | 25 | 33 | 30 | 32 | 27 |
| **Invention A4** | 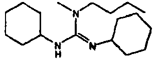 | 3 | 1,2 | 8 | non | 31 | 24 | 32 | 27 | 32 | 27 | 33 | 28 | 33 | 28 | 33 | 29 |
| | | 1,5 | 0,6 | 10 | non | 29 | 18 | 31 | 24 | 32 | 27 | 33 | 27 | 33 | 29 | 34 | 29 |

Le catalyseur à l'étain donne une bonne dureté mais seulement à 14 jours avec ce système beaucoup moins réactif. Le temps de formation de peau est par ailleurs prohibitif. Avec les catalyseurs selon l'invention, les temps de formation de peau sont courts et modulables selon la teneur et les cinétiques de dureté beaucoup plus rapides: des niveaux de dureté équivalents sont obtenus. Un élastomère ne dégageant pratiquement que de l'éthanol est donc permis avec les catalyseurs selon l'invention.

### III) Enduction sur une dentelle (RTV-1 acétoxy - réticulant silanes de type acétoxy)

### Formulation testée (% en poids):

On prépare un empâtage suivant
- 70,8% huile polydiméthylsiloxane α,ω-dihydroxylée de viscosité 50000 mPa.s
- 6,4% huile polydiméthylsiloxane α,ω-dihydroxylée de viscosité 14000 mPa.s α,ω-dihydroxylée
- 9,6 % huile polydiméthylsiloxane de viscosité 500 mPa.s
- 10,4 de silice traitée diméthylsilazane

Puis, on ajoute à cet empatâge x % du catalyseur à tester et 3,8% d'un mélange éthyltriacétoxy silane et méthyltriacétoxy silane.

### a) Quantité de catalyseur ajoutée (% poids):

DLDBE 0,06%
Catalyseur (A3)= 0,14%
Catalyseur (A4) = 0,10%

### b) Nombre d'équivalent/nombre de mole d'étain

DLDBE=1
Catalyseur **(A3)**= 5
Catalyseur **(A4)**= 5

La composition est enduite de manière continue avec une épaisseur de 0,3 mm sur une dentelle standard tricotée à base de polyamide, polyester et élasthanne. La dentelle enduite est laissée réticuler à température ambiante jusqu'à obtention de l'élastomère. Les propriétés mécaniques des différents élastomères sont consignées dans le Tableau III suivant:

**Tableau III**

| | Propriétés mécaniques des élastomères obtenus après réticulation à température ambiante | |
|---|---|---|
| | Résistance max (Mpa) | Allongement à la rupture (%) |
| Catalyseur DLDBE Comparatif | 0,65 | 219,7 |
| Catalyseur **(A3)** Invention | 0,58 | 263 |
| Catalyseur **(A4)** Invention | 0,96 | 477 |

On observe que les élastomères obtenus avec les catalyseurs selon l'invention présentent un allongement à la rupture nettement amélioré:
- pour le catalyseur **(A3)** = 263 % (amélioration de +19,7%par rapport au catalyseur à l'étain), et
- pour le catalyseur **(A4)** = 477% (amélioration de +117% par rapport au catalyseur à l'étain).

Cette propriété est importante notamment pour éviter une sensation de compression gênante pour la personne.

### IV) Tests d'adhérence qualitative (RTV-1 acétoxy - réticulant silanes de type acétoxy) sur support en PVC

### Formulation testée (% en poids)

On prépare un empâtage suivant
- 70,8% huile polydiméthylsiloxane α,α-dihydroxylée de viscosité 50000 mPa.s
- 6,4% huile polydiméthylsiloxane α,ω-dihydroxylée de viscosité 14000 mPa.s α,ω-dihydroxylée
- 9,6 % huile polydiméthylsiloxane de viscosité 500 mPa.s
- 10,4 de silice traitée diméthylsilazane
Puis, on ajoute à cet empatâge x % du catalyseur à tester et 3,8% d'un mélange éthyltriacétoxy silane et méthyltriacétoxy silane.

Pour réaliser des tests d'adhérence qualitative, un cordon de produit préparé à partir de la formulation à tester est déposé sur un support souple en polychlorure de vinyle (PVC) préalablement nettoyés. Après une durée de réticulation de 7 jours (à 23°C et 50% HR = humidité résiduelle), on réalise un pelage manuel après avoir fait une amorce de décollement à l'interface support/joint. Les résultats sont exprimés en fonction du type de rupture du cordon de produit:
- "RA": rupture adhésive (le cordon se décolle du support)
- "RA+": rupture à tendance adhésive, mais nécessitant d'appliquer une force pour décoller le cordon
- "RA++": rupture à tendance adhésive, mais nécessitant d'appliquer une force 5 importante pour décoller le cordon, et
- "RC": rupture de type cohésive (le cordon rompt sous l'application d'une force très élevée, sans s'être décollé du support, même partiellement); dans ce cas l'adhérence sur le support est optimale.

### a) Quantité de catalyseur ajoutée (% poids):

DLDBE 0,06%
Catalyseur (A3)= 0,14%
Catalyseur (A4) = 0,10%

### b) Nombre d'équivalent/nombre de mole d'étain DLDBE=1

Catalyseur (A3)= 5
Catalyseur (A4) = 5

**Tableau IV**

| | Adhésion sur un support en PVC |
|---|---|
| Catalyseur **DLDBE** Comparatif | RA |
| Catalyseur **(A3)** Invention | RC |
| Catalyseur **(A4)** Invention | RA+ |

Les catalyseurs selon l'invention permettent d'obtenir des élastomères ayant une meilleure adhésion sur le support enduit.

## Revendications

1. Procédé d'enduction d'une composition silicone **X** précurseur d'un élastomère et réticulable par des réactions de polycondensation sur un support souple **S** qui est en textile, en papier, en polychlorure de vinyle, en polyester, en polypropylène, en polyamide ; en polyéthylène ; en polyuréthanne, en tissus de fibres de verre non tissés ou en polyéthylène téréphtalate comprenant les étapes a), b) et c) suivantes :
a) on prépare une composition silicone **X** réticulable en élastomère par des réactions de polycondensation, ne contenant pas de catalyseur métallique et comprenant:
- une base silicone **B** comprenant au moins une huile polyorganosiloxane réticulable par réaction de polycondensation de manière à former un élastomère silicone, et
- une quantité catalytiquement efficace d'au moins un catalyseur de polycondensation **A** qui est un composé organique non silylé et répondant à la formule générale **(I):** 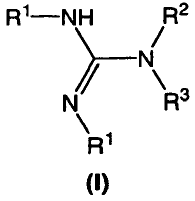 dans laquelle,
- les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
- le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
- le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, et
- avec la condition supplémentaire que les radicaux R¹, R² et R³ ne comprennent pas d'atome de silicium,
b) puis on dépose de manière continue ou discontinue ladite composition silicone **X** sur ledit support souple **S**, et
c) on laisse réticuler ladite composition silicone **X** en présence d'humidité apportée par l'air ambiant ou par addition préalable d'eau de manière à former un élastomère silicone .

2. Procédé selon la revendication 1 dans lequel le catalyseur de polycondensation **A** est un composé organique non silylé choisi parmi le groupe constitué par les composés **(A1)** à **(A6)** suivants:

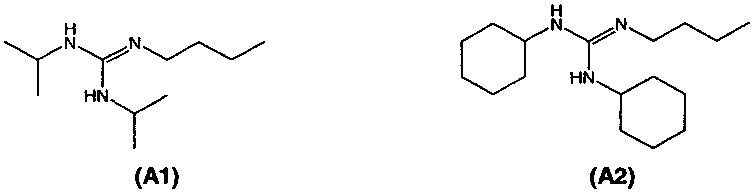

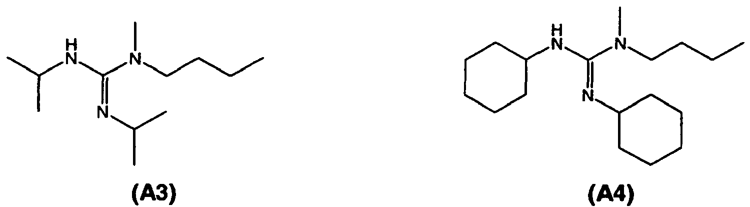

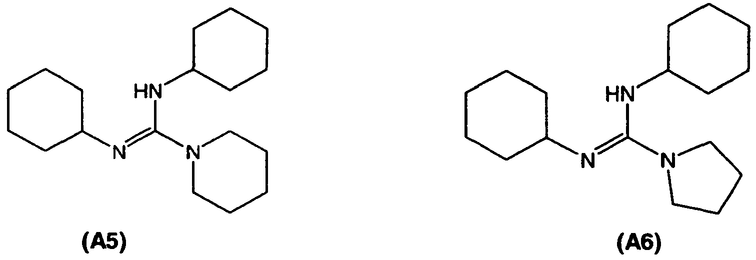

3. Procédé selon la revendication 1 dans lequel la composition **X** d'organopolysiloxane réticulable en élastomère par des réactions de polycondensation comprend une quantité catalytiquement efficace d'au moins un catalyseur de polycondensation **A** tel que défini selon les revendications 1 ou 2 et une base silicone **B** comprenant:
- au moins une huile polyorganosiloxane **C** susceptible de réticuler par polycondensation en un élastomère;
- éventuellement au moins un agent de réticulation **D**;
- éventuellement au moins un promoteur d'adhérence **E**; et
- éventuellement au moins une charge minérale siliceuse, organique et/ou non siliceuse **F**.

4. Procédé selon l'une quelconque des revendications 1 à 3 **caractérisé en ce que** à l'étape b) on dépose ladite composition silicone **X** sur le support souple **S** par transfert, par rouleau lécheur ou par pulvérisation à l'aide d'une buse, d'une racle, d'un cadre rotatif ou d'un rouleau inverse « reverse roll ».

5. Procédé selon la revendication 1 **caractérisé en ce que** le support souple **S** en textile est une dentelle ou une bande élastique.

6. Utilisation de la composition silicone **X** telle que définie selon l'une quelconque des revendications 1 à 3 pour enduire un support souple **S** en textile et plus particulièrement une dentelle ou une bande élastique.

7. Utilisation de la composition silicone **X** telle que définie selon l'une quelconque des revendications 1 à 3 pour enduire un support souple **S** en papier, en polychlorure de vinyle, en polyester, en polypropylène, en polyamide ; en polyéthylène ; en polyuréthanne, en tissus de fibres de verre non tissés ou en polyéthylène téréphtalate.

## Patentansprüche

1. Verfahren zum Auftragen einer Silikonzusammensetzung **X**, die eine Vorstufe eines Elastomers darstellt und durch Polykondensationsreaktionen vernetzbar ist, auf einen flexiblen Träger **S aus** Textil, Papier, Polyvinylchlorid, Polyester, Polypropylen, Polyamid, Polyethylen, Polyurethan, Glasfaservliesstoffen oder Polyethylenterephthalat, umfassend die folgenden Schritte a), b) und c) :
a) man stellt eine durch Polykondensationsreaktionen zu einem Elastomer vernetzbare Silikonzusammensetzung **X** her, die keinen Metallkatalysator enthält und Folgendes umfasst:
- eine Silikonbasis **B**, umfassend mindestens ein durch Polykondensationsreaktion zu einem Silikonelastomer vernetzbares Polyorganosiloxanöl und
- eine katalytisch wirksame Menge mindestens eines Polykondensationskatalysators **A**, bei dem es sich um eine nichtsilylierte organische Verbindung der allgemeinen Formel (I) handelt: 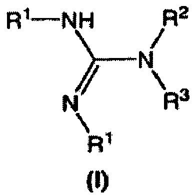 worin
- die Reste R¹ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, stehen,
- der Rest R² für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine aromatische Gruppe, eine Arylalkylgruppe, eine Fluoralkylgruppe, eine Alkylamingruppe oder eine Alkylguanidingruppe steht;
- der Rest R³ für eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe oder eine Alkylguanidingruppe steht;
- dann, wenn der-Rest R² nicht für ein Wasserstoffatom steht, die Reste R² und R³ zu einem 3-, 4-, 5-, 6- oder 7-gliedrigen aliphatischen Ring, der gegebenenfalls durch einen oder mehrere Substituenten substituiert ist, verbunden sein können, und
- mit der zusätzlichen Maßgabe, dass die Reste R¹, R² und R³ kein Siliciumatom enthalten,
b) man bringt die Silikonzusammensetzung **X** kontinuierlich oder diskontinuierlich auf den flexiblen Träger **S** auf,
c) man lässt die Silikonzusammensetzung **X** in Gegenwart von Feuchtigkeit, die durch die Umgebungsluft oder durch vorherige Zugabe von Wasser bereitgestellt wird, zu einem Silikonelastomer vernetzen.

2. Verfahren nach Anspruch 1, bei dem es sich bei dem Polykondensationskatalysator **A** um eine nichtsilylierte organische Verbindung aus der Gruppe bestehend aus den folgenden Verbindungen **(A1)** bis **(A6)** handelt:

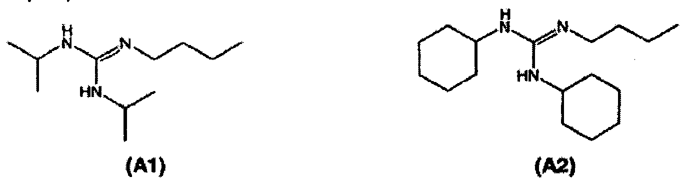

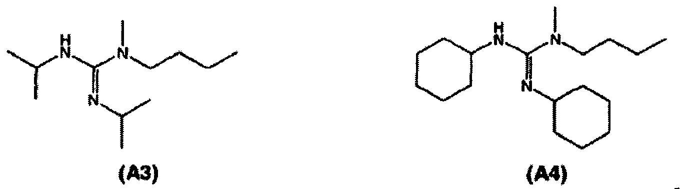

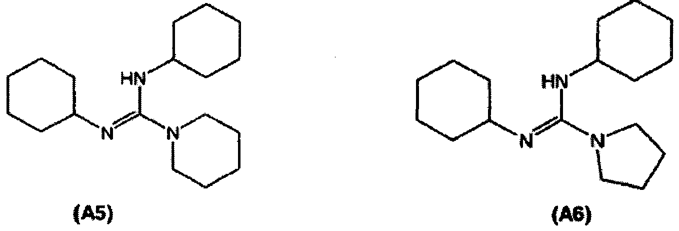

3. Verfahren nach Anspruch 1, bei dem die Organopolysiloxanzusammensetzung **X,** die durch Polykondensationsreaktionen zu einem Elastomer vernetzbar ist, eine katalytisch wirksame Menge mindestens eines Polykondensationskatalysators **A** gemäß den Ansprüchen 1 oder 2 und eine Silikonbasis **B**, umfassend:
- mindestens ein Polyorganosiloxanöl **C**, das durch Polykondensation zu einem Elastomer vernetzt werden kann;
- gegebenenfalls mindestens ein Vernetzungsmittel **D**;
- gegebenenfalls mindestens einen Haftvermittler **E** und
- gegebenenfalls mindestens einen siliciumhaltigen, organischen und/oder nicht siliciumhaltigen mineralischen Füllstoff **F**
umfasst.

4. Verfahren nach einem der Ansprüche 1 bis 3, **dadurch gekennzeichnet, dass** man in Schritt b) die Silikonzusammensetzung **X** mittels Transfer, Pflatschwalze oder durch Aufsprühen mit Hilfe einer Düse, einer Rakel, einer Rotationsmaschine oder einer Umkehrwalze auf den flexiblen textilen Träger **S** aufbringt.

5. Verfahren nach Anspruch 1, **dadurch gekennzeichnet, dass** der flexible Träger **S** aus Textil ist und ein Spitzengewebe oder ein elastisches Band ist.

6. Verwendung der Silikonzusammensetzung **X** gemäß einem der Ansprüche 1 bis 3 zum Beschichten eines flexiblen Trägers **S** aus Textil und insbesondere eines Spitzengewebes oder eines elastischen Bands.

7. Verwendung der Silikonzusammensetzung **X** gemäß einem der Ansprüche 1 bis 3 zum Beschichten eines flexiblen Trägers **S** aus Papier, Polyvinylchlorid, Polyester, Polypropylen, Polyamid, Polyethylen, Polyurethan, Glasfaservliesstoffen oder Polyethylenterephthalat.

## Claims

1. Method for coating a silicone composition **X**, which is a precursor of an elastomer and is crosslinkable by polycondensation reactions, onto a flexible substrate **S** which is made of textile, of paper, of polyvinyl chloride, of polyester, of polypropylene, of polyamide, of polyethylene, of polyurethane, of nonwoven fiberglass fabrics or of polyethylene terephthalate, comprising the following steps a), b), and c):
a) a silicone composition **X** is prepared which is crosslinkable to elastomer by polycondensation reactions, which contains no metal catalyst, and which comprises:
- a silicone base **B** comprising at least one polyorganosiloxane oil which is crosslinkable by polycondensation reaction so as to form a silicone elastomer, and
- a catalytically effective amount of at least one polycondensation catalyst **A** which is a nonsilylated organic compound conforming to the general formula **(I)**: 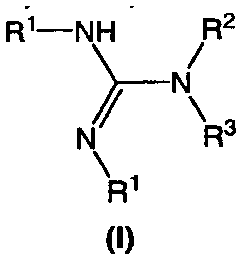 in which
- the identical or different radicals R¹ represent independently of one another a linear or branched monovalent alkyl group, a cycloalkyl group, a (cycloalkyl)alkyl group, the cyclic moiety being substituted or unsubstituted and possibly comprising at least one heteroatom or a fluoroalkyl group,
- the radical R² represents a hydrogen atom, a linear or branched monovalent alkyl group, a cycloalkyl group, an alkyl group substituted by a cyclic moiety which is substituted or unsubstituted and possibly comprises at least one heteroatom, an aromatic group, an arylalkyl group, a fluoroalkyl group or an alkylamine or alkylguanidine group, and
- the radical R³ represents a linear or branched monovalent alkyl group, a cycloalkyl group, an alkyl group which is substituted by a cyclic moiety which is substituted or unsubstituted and possibly comprises at least one heteroatom, or an arylalkyl, fluoroalkyl, alkylamine or alkylguanidine group;
- when the radical R² is not a hydrogen atom, the radicals R² and R³ may be joined to form a 3-, 4-, 5-, 6- or 7-membered aliphatic cyclic moiety optionally substituted by one or more substituents, and
- with the further condition that the radicals R¹, R², and R³ contain no silicon atom;
b) then said silicone composition **X** is applied continuously or discontinuously to said flexible substrate **S**, and
c) said silicone composition **X** is crosslinked in the presence of moisture provided by the ambient air or by prior addition of water, so as to form a silicone elastomer.

2. Method according to Claim 1, wherein the polycondensation catalyst **A** is a nonsilylated organic compound selected from the group consisting of the following compounds **(A1)** to **(A6)**:

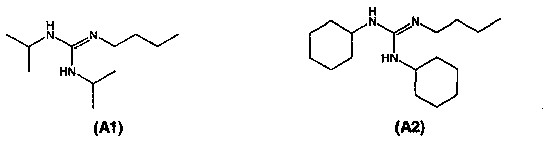

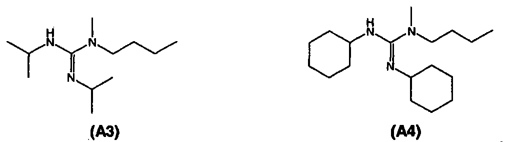

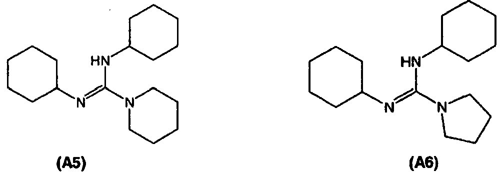

3. Method according to Claim 1, wherein the organopolysiloxane composition **X** which is crosslinkable to elastomer by polycondensation reactions comprises a catalytically effective amount of at least one polycondensation catalyst **A** as defined in Claims 1 or 2 and a silicone base **B** comprising:
- at least one polyorganosiloxane oil **C** which is crosslinkable by polycondensation to give an elastomer;
- optionally at least one crosslinking agent **D**;
- optionally at least one adhesion promoter **E**; and
- optionally at least one nonsiliceous, organic and/or siliceous inorganic filler **F**.

4. Method according to any of Claims 1 to 3, **characterized in that** in step b) said silicone composition **X** is applied to the flexible substrate **S** by transfer, by lick roller or by spraying using a nozzle, a doctor, a rotary machine or a reverse roll.

5. Method according to Claim 1, **characterized in that** the flexible textile substrate **S** is a piece of lace or an elastic strip.

6. Use of the silicone composition **X** as defined in any of Claims 1 to 3 for coating a flexible textile substrate **S** and more particularly a piece of lace or an elastic strip.

7. Use of the silicone composition **X** as defined in. any of Claims 1 to 3 for coating a flexible substrate **S** made of paper, of polyvinyl chloride, of polyester, of polypropylene, of polyamide, of polyethylene, of polyurethane, of nonwoven fiberglass fabrics or of polyethylene terephthalate.
